# EUROPEAN PATENT APPLICATION

(11) **EP 4 687 016 A1**
(43) Date of publication of application: **04.02.2026**
(21) Application number: 25191777.9
(22) Date of filing: 25.07.2025
(51) Int. Cl.: G06F 3/048, G06F 3/0482, G06F 3/0484, G06F 3/04847, G06F 7/06, G06F 7/22, G06F 16/58

(54) **INFORMATION PROCESSING APPARATUS, INFORMATION PROCESSING METHOD, AND PROGRAM**

(30) Priority: 29.07.2024 JP 2024122305
(71) Applicant: CANON KABUSHIKI KAISHA, Ohta-ku Tokyo 146-8501 (JP)
(72) Inventor: YAMAMOTO, Naoko, Tokyo, 146-8501 (JP); YAMAMOTO, Tatsuya, Tokyo, 146-8501 (JP)
(74) Representative: TBK

(57) **Abstract**

An information processing apparatus (101) includes a management unit (302) to manage a plurality of types of sort conditions, each of the types associated with one or more items for sorting an image; an obtaining unit (301) to obtain the type selected by a user from the plurality of the types of sort conditions; and a display control unit (303) to cause a screen to be displayed, the screen being for creating the sort condition and being configured to allow the user to designate a value of the item associated with the type selected by the user.

## Description

### TECHNICAL FIELD

The present disclosure relates to image management processing.

### BACKGROUND

### Description of the Related Art

There is a method of referring to attribute information of captured images and thereby selecting a captured image matching a specific condition. This specific condition will be referred to as a "sort condition". The sort condition is sometimes composed of multiple items. In this case, on the condition that the attribute information of a captured image matches all the values of the multiple items, the captured image is determined as matching the sort condition and is selected.

Japanese Patent Laid-Open No. 2013-210872 describes a setting screen on which a user sets items constituting a condition for selecting a specific content.

### SUMMARY

It is conceivable that a screen for creating a sort condition like the setting screen in Japanese Patent Laid-Open No. 2013-210872 could be presented to a user, and the user could create the sort condition by themselves by inputting values for the required items from among multiple items via that screen. However, the setting screen in Japanese Patent Laid-Open No. 2013-210872 contains the input fields of all the items to which the user can input values. Accordingly, in a case where there are a large number of items, the screen is so hard to grasp at a glance that the user cannot know how many items in total the values can be inputted for. For this reason, in the case where a screen like the setting screen in Japanese Patent Laid-Open No. 2013-210872 is presented to the user in order for the user to create a sort condition by themselves, the user may have to bear a heavy burden in creating the sort condition.

The present disclosure in its first aspect provides an information processing apparatus as specified in claim 1. Optional features are specified in claim 2 to 13.

The present disclosure in its second aspect provides an information processing method as specified in claim 14

The present disclosure in its third aspect provides program as specified in claim 15.

According to the technique disclosed herein, the burden on the user in creating a sort condition can be reduced.

Features of the present disclosure will become apparent from the following description of embodiments with reference to the attached drawings. The following description of embodiments are described by way of example.

### BRIEF DESCRIPTION OF THE DRAWINGS

Fig. 1 is a diagram illustrating an example of a system configuration;
Fig. 2 is a diagram illustrating a hardware configuration of an image management apparatus;
Fig. 3 is a diagram illustrating an example of a functional configuration of the image management apparatus;
Fig. 4 is a flowchart for explaining a sequence of overall processing in the image management apparatus;
Fig. 5 is a diagram illustrating a comparative example of a sort condition creation screen;
Fig. 6 is a diagram presenting an example of a sort condition type management table;
Fig. 7 is a flowchart for explaining sort condition creation processing;
Fig. 8 is a flowchart for explaining sort condition creation screen display processing;
Fig. 9 is a diagram illustrating an example of a sort condition type selection screen and sort condition creation screens;
Figs. 10A to 10D are diagrams illustrating an example of sort condition creation screens;
Fig. 11 is a diagram presenting an example of a sort condition table;
Fig. 12 is a diagram presenting an example of an image management table;
Fig. 13 is a flowchart for explaining image sort processing;
Fig. 14 is a diagram presenting an example of an image management table;
Fig. 15 is a flowchart for explaining a sequence of overall processing in the image management apparatus;
Fig. 16 is a flowchart presenting a sequence of sort condition creation or edit processing;
Fig. 17 is a flowchart for explaining sort condition edit screen display processing; and
Fig. 18 is a diagram illustrating an example of sort condition edit screens.

### DESCRIPTION OF THE EMBODIMENTS

Hereinafter, the technique disclosed herein will be described in details based on embodiments in reference to the accompanying drawings. The configurations in the following embodiments are just examples, and the technique disclosed herein should not be limited to the illustrated configurations.

### <Embodiment 1>

### [System Configuration]

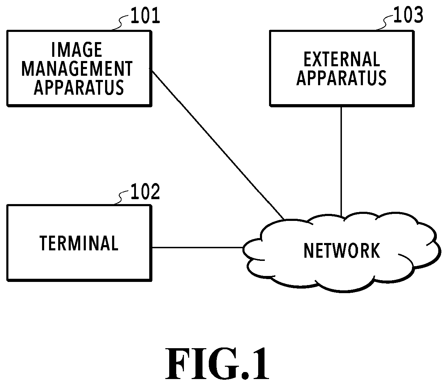

Fig. 1 is a diagram illustrating an example of an image management system according to the present embodiment. The image management system includes an image management apparatus 101, a terminal 102, and an external apparatus 103. The image management apparatus 101 is connected to one or more external apparatuses 103 and one or more users' terminals 102 via a network.

The image management apparatus 101 is an information processing apparatus to provide a service for receiving image data transmitted from a camera or terminal of a user having an account and storing the received image data. The service provided by the image management apparatus 101 is, for example, a cloud service in which images captured by digital cameras are uploaded and stored in real time using a network such as a Wi-Fi network. The image management apparatus 101 also provides a service for transmitting stored images to the external apparatuses 103. Such automatic image transfer to the external apparatuses 103 makes it possible to prevent the storage capacity from being full. Moreover, the image management apparatus 101 is described herein as an apparatus having a function to sort out stored images. The sorting-out of images by the image management apparatus 101 makes it possible to reduce the user's effort in selecting a desired image from among a large number of images.

In the present embodiment, the user is a user having an account for the services provided by the image management apparatus 101. The user can create the account via the user's own terminal connected to the network. The terminal 102 is an apparatus having a display unit and an operation unit such as a touch panel, and is, for example, a personal computer (PC), a smartphone, a camera, or the like. The terminal 102 is described herein as a terminal to transmit images to the image management apparatus 101, but the user may transmit images to the image management apparatus 101 from a terminal different from the terminal 102.

The image management apparatus 101 is capable of causing a screen to be displayed on a display unit of the terminal 102. The user is enabled to issue various instructions to the image management apparatus 101 via the screen. The image management apparatus 101 has a function to receive input operations performed by the user via the terminal 102. For example, the user is enabled to take actions such as viewing and deleting of user's images managed by the image management apparatus 101. In addition, the user is also enabled to change, via the screen, the settings related to the services running on the image management apparatus 101.

The external apparatus 103 is, for example, an information processing apparatus or a server on the cloud that provides a service such as a cloud storage service subscribed to by the user for the purposes of storing, sharing, and editing images. The service provided by the external apparatus 103 will be also referred to as an external service in order to distinguish it from the services provided by the image management apparatus 101. The number of the external apparatuses 103, in other words, the number of external services is not limited. The image management apparatus 101 transmits a designated image to the external apparatus 103.

The network is, for example, a local area network (LAN), the Internet, or the like. Since the image management apparatus 101, the external apparatuses 103, and the users' terminals 102 are connected to each other via the network, the system is configured such that mutual communications between these apparatuses and terminals can be performed.

### [Hardware Configuration]

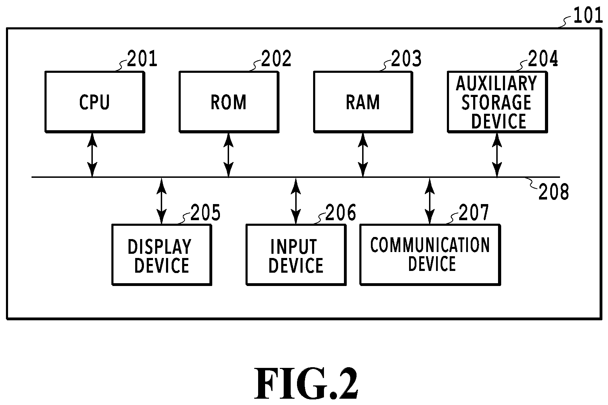

Fig. 2 is a diagram for explaining a hardware configuration of the image management apparatus 101 to serve as the information processing apparatus according to the present embodiment.

A CPU 201 is a central processing unit and controls constituent elements connected to a system bus 208 by performing calculations, logical determinations, and so forth for various processes.

A read-only memory (ROM) 202 is a program memory, and stores a program including various processing procedures to be described later for control by the CPU 201.

A random access memory (RAM) 203 is a memory unit to be used as temporary memory areas for a main memory, a work area, and the like of the CPU 201. The CPU 201 executes processing according to each of the following flowcharts by reading and executing a program stored in the ROM 202. The ROM 202 may implement a program memory by allowing the program stored in the ROM 202 to be loaded into the RAM 203. The CPU 201 writes an execution result of each process to the RAM 203.

An auxiliary storage device 204 is a storage device that stores electronic data and a program according to the present embodiment, and stores the data so that the data will not be deleted even after the power is turned off. The auxiliary storage device 204 can be built by, for example, a medium (storage medium) and an external storage drive for enabling access to the medium. Such a medium is, for example, a flash memory, a USB memory, a solid state drive (SSD) memory, a hard disk drive (HDD), a flexible disk (FD), a CD-ROM, a DVD, a SD card, or the like. The auxiliary storage device 204 may be a server apparatus connected to the image management apparatus 101 via the network. The auxiliary storage device 204 may be a device that is built in the main body and cannot be removed from the CPU 201 like a solid state drive (SSD) memory. **In** the present embodiment, the auxiliary storage device 204 is described as a solid state drive (SSD) memory built in the main body. The auxiliary storage device 204 may implement a program memory by allowing the program stored in the auxiliary storage device 204 to be loaded into the RAM 203. The CPU 201 stores an execution result of each process into the auxiliary storage device 204.

A display device 205 is a display unit such, for example, as a liquid crystal display or an organic EL display. The CPU 201 functions as a display control unit and causes the display device 205 to display a screen containing images, characters, figures, and so on.

An input device 206 is an operation unit including, for example, a touch panel, buttons, a mouse, and the like and receives various operations performed by the user. The input device 206 may be an input unit that is attached to the display device 205 and is capable of sensing actions by the user. For example, the input device 206 may be a pressure touch panel, an electrostatic touch panel, a light pen, or the like.

Here, at least one of the display device 205 and the input device 206 may be provided as an external apparatus connected to the image management apparatus 101 by wire or wirelessly.

A communication device 207 performs two-way wired or wireless communication with another information processing apparatus, a communication apparatus, an external storage apparatus, and so on by use of a known communication technology.

The image management apparatus 101 is described as an apparatus for convenience of description in the present embodiment, but may be a system in which multiple information processing apparatuses behave like a single image management apparatus 101.

### [Functional Configuration]

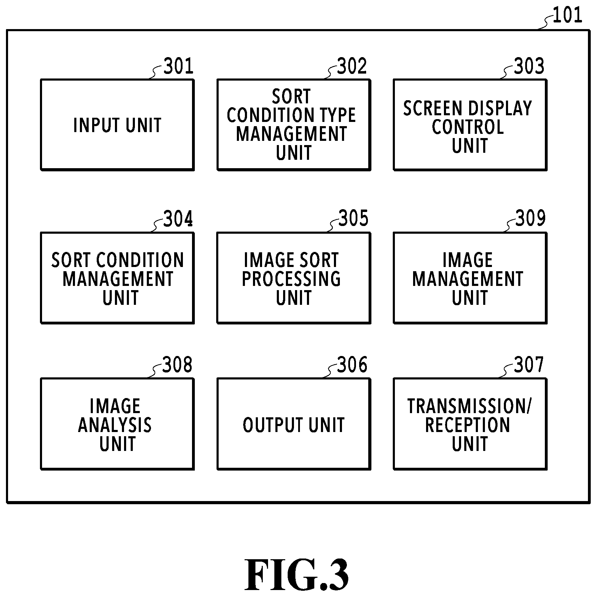

Fig. 3 is a diagram illustrating a functional configuration of the image management apparatus 101 in the present embodiment.

An input unit 301 receives data of an operation input or the like by the user via the terminal 102. The input unit 301 may receive an operation input by the user via the input device 206.

An output unit 306 transmits data to the terminal 102.

A transmission/reception unit 307 transmits and receives data to and from the external apparatus 103 on the Internet.

A sort condition type management unit 302 manages each of sort condition types (types of sort conditions) and information on sort items settable depending on the sort condition type.

A screen display control unit 303 performs control to cause a screen, such as a sort condition creation screen for creating a sort condition based on a user's instruction, to be displayed on the terminal 102 of the user.

A sort condition management unit 304 manages a sort condition created by the user performing inputs on the sort condition creation screen.

An image management unit 309 manages user's images uploaded to the image management apparatus 101.

An image analysis unit 308 analyzes the images uploaded to the image management apparatus 101.

An image sort processing unit 305 performs processing of setting a sort condition to be used to sort out the images among the sort conditions created based on user's instructions, and sorting out the images.

The functions of the units in Fig. 3 are implemented by the CPU 201 reading a predetermined program stored in the ROM 202 or the like into the RAM 203 and executing the program, but are not limited to this. For example, other hardware such as a graphics processing unit (GPU) or field programmable gate array (FPGA) may be also used to speed up calculations. The functions may be implemented by a collaboration of software and hardware such as a dedicated integrated circuit (IC) or at least one or all of the functions may be implemented by hardware.

### [Sequence of Processing]

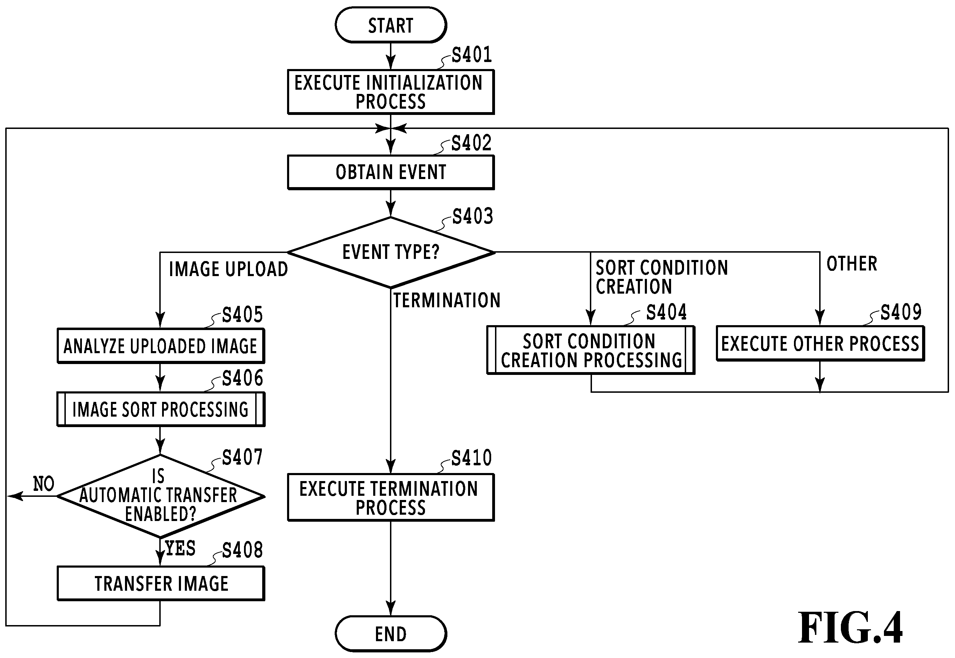

Fig. 4 is a flowchart presenting processing of the image management apparatus 101 in a case where the image management apparatus 101 obtains an instruction issued by the user via the terminal 102. The processing according to the flowchart of Fig. 4 is performed by the CPU 201 expanding program codes stored in the ROM 202 or the like onto the RAM 203 and executing the program codes. Instead, some or all of functions in steps of Fig. 4 may be implemented by hardware such as an ASIC or electronic circuit. Sign "S" in description of each process means a step in the flowchart, and the same applies to the other following flowcharts. Upon startup of the image management apparatus 101, the flowchart of Fig. 4 is started.

In S401, the CPU 201 executes an initialization process. In the initialization process, initial settings and the like of the image management apparatus 101 are performed. After completing the initialization process, the CPU 201 waits for an event. The event may be a process request from the terminal 102 or an event such as the start of a batch process in the image management apparatus 101.

In S402, the CPU 201 obtains an event. In S403, the CPU 201 switches subsequent processing depending on the type of the event obtained in S402.

If determining that an event with an instruction to create a sort condition is received from the terminal 102 of the user in S403, the CPU 201 advances the processing to S404 in order to perform sort condition creation processing. Details of the sort condition creation processing in S404 will be described later. After the end of S404, the CPU 201 returns to S402 for receiving an event again.

If obtaining an event with an upload of a user's image to the image management apparatus 101 in S403, the CPU 201 advances the processing to S405.

In S405, the CPU 201 analyzes the uploaded image.

In S406, the CPU 201 performs sort processing on the uploaded image. Details of the sort processing will be described later.

In S407, the CPU 201 determines whether or not an automatic image transfer function of the image management apparatus 101 is enabled. If determining that the automatic image transfer function is enabled (YES in S407), the CPU 201 advances the processing to S408.

In S408, the CPU 201 transfers the image matching the sort condition to the connected external apparatus 103. If determining that the automatic image transfer function is not enabled (NO in S407) or after the end of S408, the CPU 201 returns to S402 for receiving an event again.

If the type of the event is an user's instruction to manually transfer an image or to download an image or the like in S403, the CPU 201 advances the processing to S409. In S409, the CPU 201 performs a corresponding process. After the end of S409, the CPU 201 returns to S402 for receiving an event again.

If obtaining an event to terminate the processing in S403, the CPU 201 advances the processing to S410. In S410, the CPU 201 performs a termination process to terminate the flowchart of Fig. 4.

### [Sort Processing and Sort Conditions]

The sort processing is processing of selecting an image matching a sort condition registered as a result of execution of S404 from among images of a certain user. For example, in a case where a sort condition for sorting out an image containing people is created in S404, an image containing people can be selected from among the uploaded images of the certain user in S406. The processing of selecting an image matching a sort condition is referred to as "sorting" or "sort processing.

The sort condition is composed of one or multiple sort items. The sort processing includes a process of determining whether or not a sort target image matches a certain sort condition. In this process, the sort target image is determined to match the sort condition in the case where the information of the sort target image matches the values of all the sort items constituting the sort condition. The user can create a sort condition by setting relevant values for the respective sort items (item values).

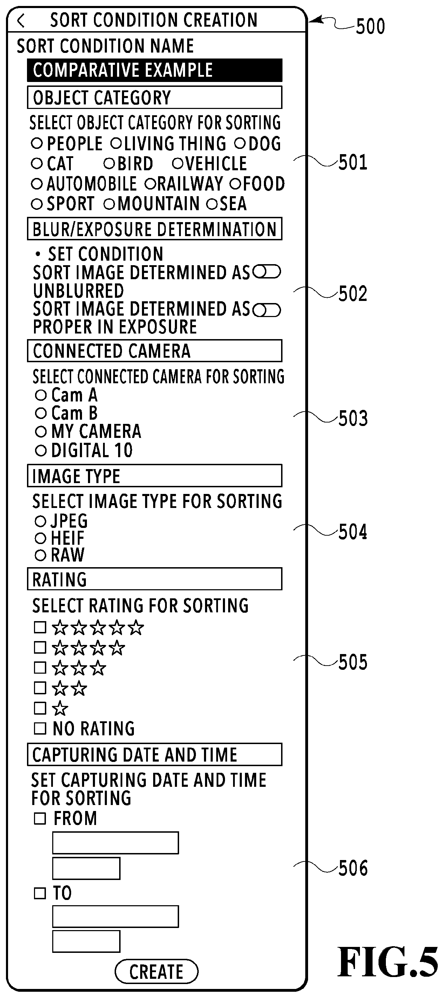

Fig. 5 is a diagram illustrating a comparative example of a sort condition creation screen for creating a sort condition.

In the present embodiment, the sort items are "object category", "blur/exposure determination", "connected camera", "image type", "rating", and "capturing date and time". The sort items do not have to be limited to the above six items and may include other items. A sort condition creation screen 500 in Fig. 5 is an example of a sort condition creation screen displayed so as to enable the user to input the item values of all the sort items. In the case where the sort condition creation screen in a state where all of setting areas 501 to 506 for inputting the item values of the sort items are presented is displayed as illustrated in Fig. 5, the user has a heavy burden in finding out sort items for which the item values should be inputted. There is also a possibility that the user will not be able to determine which sort items to input the item values for. To address this, in the present embodiment, description will be given of a method of reducing the burden on the user in creating a sort condition by setting a sort condition type to begin with, and then displaying a sort condition creation screen specific to the sort condition type.

### [Sort condition Creation Processing]

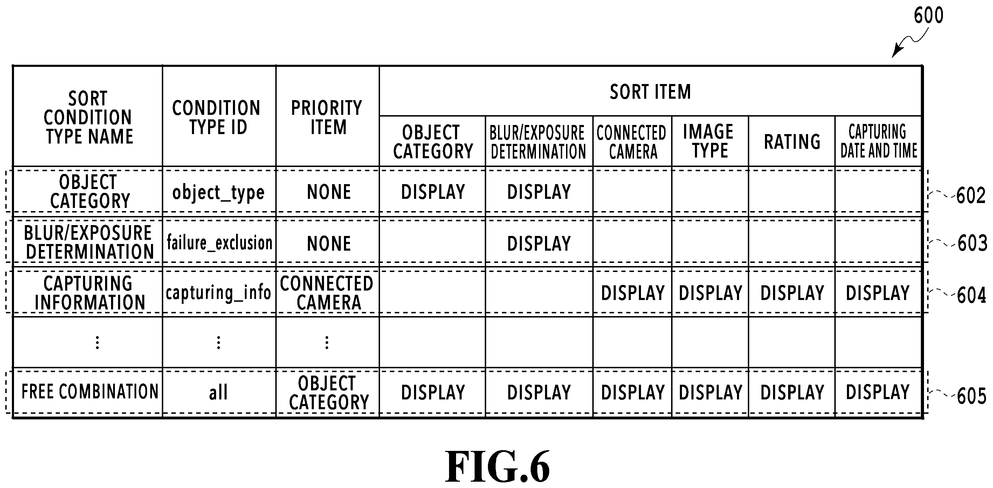

Fig. 6 is a diagram presenting a sort condition type management table managed by the sort condition type management unit 302 for managing sort condition types. In the present embodiment, a sort condition creation screen specific to any of sort condition types registered in advance can be displayed to the user. The sort condition types registered in advance are described herein as four types, namely, "object category," "blur/exposure determination", "capturing information", and "free combination", but are not limited to these four.

A sort condition type management table 600 is a table for managing sort items to be contained in a sort condition creation screen specific to each of the four sort condition types. A record (row) of the sort condition type management table 600 is added for each value of a condition type ID identifying a sort type. A priority item and sort items associated with each value of the condition type **ID** are stored in the same record.

In the sort condition type management table 600, ID values of the four sort types are held in the column for holding the condition type ID. For example, "object_type" specifying "object category", "failure_exclusion" specifying "blur/exposure determination", "capturing_info" specifying "capturing information", and "all" specifying "free combination" are held.

In the sort condition type management table 600, a sort item column includes six columns with the item names of the above six sort items. "Display" is held in the column with the item name of the sort item for which the user is to be enabled to input and set the item value on the sort condition creation screen.

In a case where the priority item is set among the sort item names for which "display" is held, the sort item name specifying the priority item is held in a priority item column in the sort condition type management table 600. In a case where the priority item is not set, "None" is held. The priority item is a sort item to be displayed with priority on the sort condition creation screen.

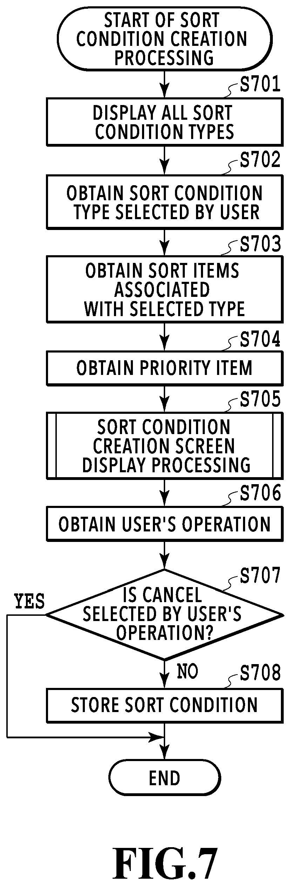

Fig. 7 is a flowchart for explaining the sort condition creation processing in S404 of Fig. 4. In the case where the CPU 201 receives an instruction to create a sort condition from the terminal 102 in S403 of Fig. 4, the flowchart of Fig. 7 is started.

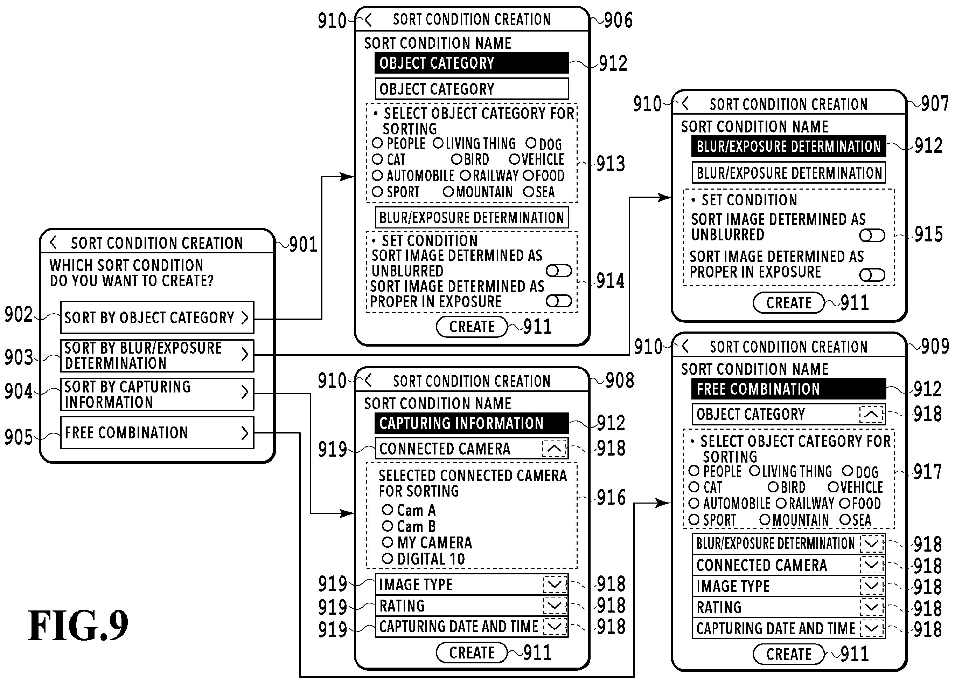

In S701, the CPU 201 refers to the sort condition type management table 600 of Fig. 6, and transmits, to the terminal 102, information on a screen for enabling the user to select a sort condition type from the sort condition types managed in the sort condition type management table 600. As a result, the terminal 102 displays a sort condition type selection screen 901 (see Fig. 9).

In S702, the CPU 201 obtains the sort condition type selected by the user from the sort condition type selection screen 901.

In S703, the CPU 201 refers to the sort condition type management table 600 of Fig. 6, and obtains the sort item names for which "display" is held from the row (record) which holds the information on the sort condition type selected by the user.

In S704, the CPU 201 obtains the value held in the priority item column from the row (record) which holds the information on the sort condition type selected by the user in the sort condition type management table 600 of Fig. 6. In the case where the priority item is not set, the item name specifying the priority item is not obtained.

In S705, the CPU 201 generates the sort condition creation screen and displays the screen on the terminal 102 of the user.

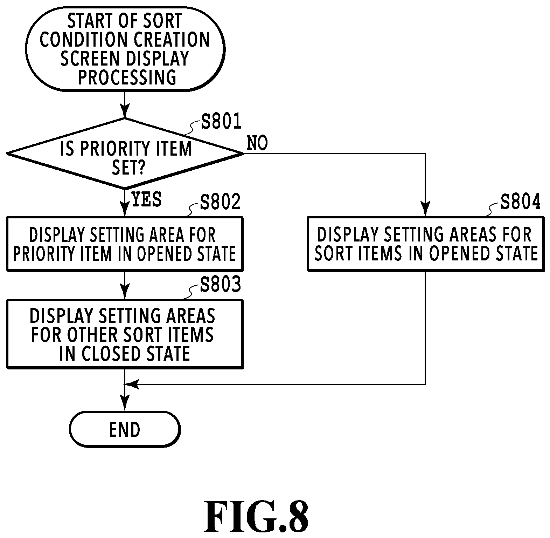

Fig. 8 is a flowchart for explaining the sort condition creation screen display processing in S705 of Fig. 7.

In S801, the CPU 201 determines whether or not the sort item name specifying the priority item is obtained in S704.

If determining that the sort item name specifying the priority item is obtained (Yes in S801), the CPU 201 proceeds to S802. In S802, the CPU 201 makes a setting for causing the sort condition creation screen to contain the sort items obtained in S703. Moreover, the CPU 201 makes a setting for displaying the sort condition creation screen on which a setting area for the priority item is opened. Then, the processing proceeds to S803.

In S803, the CPU 201 makes a setting for displaying the sort condition creation screen on which the setting areas for the sort items obtained in S703 except for the priority item are closed.

On the other hand, if determining that the sort item name specifying the priority item is not obtained (NO in S801), the CPU 201 advances the processing to S804. In S804, the CPU 201 makes a setting for causing the sort condition creation screen to contain the sort items obtained in S703. Then, the CPU 201 makes a setting for displaying the sort condition creation screen on which all the setting areas for the respective sort items are opened.

The sort condition type selection screen 901 in Fig. 9 is a screen displayed in S701 of Fig. 7 for the user to select a sort condition type. The sort condition type selection screen 901 contains buttons 902 to 904 for the respective sort condition types. Specifically, the button 902 is for selecting the sort condition type "object category", the button 903 is for selecting the sort condition type "blur/exposure determination", the button 904 is for selecting the sort condition type "capturing information", and the button 905 is for selecting the sort condition type "free combination".

For example, suppose that the user depresses the button 902 on the sort condition type selection screen 901 in Fig. 9, thereby selecting "object category" as the sort condition type. In this case, the CPU 201 performs processing of displaying a sort condition creation screen 906 in Fig. 9 specific to the sort condition type "object category".

Specifically, the CPU 201 refers to the row 602 in which "object_type", which is the ID value of "object category" is held in the condition type ID column in the sort condition type management table 600 of Fig. 6. In the row 602, "display" is held in the columns with the sort item names "object category" and "blur/exposure determination", and the priority item is not set. Accordingly, in S703, the CPU 201 obtains "object category" and "blur/exposure determination" as the sort items to be contained in the sort condition creation screen. In S704, the CPU 201 obtains information that the priority item is not set. In the flowchart of Fig. 8 presenting details of S705, No is determined in S801 and the processing proceeds to S804. In S804, the CPU 201 generates a sort condition creation screen 906 containing setting areas 913 and 914 for the obtained sort items "object category" and "blur/exposure determination". In this step, the CPU 201 generates the sort condition creation screen 906 on which the setting area 913 for "object category" and the setting area 914 for "blur/exposure determination" are displayed in an opened state. As a result, the sort condition creation screen 906 in Fig. 9 is displayed on the terminal 102 of the user.

Instead, suppose that the user depresses the button 903 on the sort condition type selection screen 901 in Fig. 9, thereby selecting "blur/exposure determination" as the sort condition type. In the row 603 of the sort condition type management table 600 of Fig. 6, "failure_exclusion", which is the ID value of the sort condition type "blur/exposure determination", is held in the condition type ID column. In this row 603, "display" is held only in the column with the sort item name "blur/exposure determination" and no sort item name is held in the priority item column. Accordingly, in S705, the CPU 201 generates a sort condition creation screen 907 in Fig. 9 on which a setting area 915 for the sort item "blur/exposure determination" is opened. As a result, the sort condition creation screen 907 in Fig. 9 is displayed on the terminal 102 of the user.

Instead, suppose that the user depresses the button 904 for the sort condition type "capturing information" on the sort condition type selection screen 901 in Fig. 9. In this case, the CPU 201 performs processing of displaying a sort condition creation screen 908 specific to "capturing information" in Fig. 9.

Specifically, the CPU 201 refers to the row 604 in which "capturing_info", which is the ID value of the sort condition type "capturing information", is held in the condition type ID column in the sort condition type management table 600 of Fig. 6. In the row 604, "display" is held in the columns with the sort item names "connected camera", "image type", "rating", and "capturing date and time", and "connected camera" is held in the priority item column.

Accordingly, in S703, the CPU 201 obtains "connected camera", "image type", "rating", and "capturing date and time" as the sort items to be contained in the sort condition creation screen. In addition, in S704, the CPU 201 obtains "connected camera" as the priority item. In the flowchart of Fig. 8 presenting the details of S705, YES is determined in S801 and the processing proceeds to S802. In S802, the CPU 201 makes a setting for displaying a setting area 916 for the priority item "connected camera" in an opened state on the sort condition creation screen. In S803, the CPU 201 makes a setting for displaying the setting areas for the sort items "image type", "rating", and "capturing date and time" other than the priority item in a closed state on the sort condition creation screen. As a result, the sort condition creation screen 908 in Fig. 9 is generated and the sort condition creation screen 908 is displayed on the terminal 102 of the user.

Instead, suppose that the user depresses the button 905 on the sort condition type selection screen 901 in Fig. 9, thereby selecting "free combination" as the sort condition type. In the row 605 of the sort condition type management table 600 of Fig. 6, "all" is held in the condition type ID column and therefore the information on the sort condition type "free combination" is held. In the row 605, "display" is held in the columns with the sort item names "object category", "blur/exposure determination", "connected camera", "image type", "rating", and "capturing date and time", and "object category" is held in the priority item column.

Accordingly, in the flowchart of Fig. 8 presenting the details of S705, in S802, the CPU 201 makes a setting for displaying a setting area 917 for the priority item, namely, the sort item "object category" in the opened state. In S803, the CPU 201 makes a setting for displaying the setting areas for the sort items "blur/exposure determination", "connected camera", "image type", "rating", and "capturing date and time" other than the priority item in the closed state. As a result, a sort condition creation screen 909 is displayed on the terminal 102 of the user.

Here, compare the sort condition creation screen 500 in Fig. 5 in the comparative example and the sort condition creation screens 906 to 909 in Fig. 9 generated according to the method in the present embodiment. The sort condition creation screens 906 to 908 in Fig. 9 are sort condition creation screens not containing all the sort items for which the item values can be set. The sort condition creation screen 909 in Fig. 9 generated in the present embodiment contains all the sort items as the sort items to be set. The sort condition creation screen 909 in Fig. 9 can be set to display, the setting areas for the sort items other than the priority item in the closed state. Therefore, the sort condition creation screen is presented that enables the user to easily find out the sort items for which the item values should be set.

In the present embodiment, in the case where the priority item is set, the setting areas for the sort items other than the priority item are displayed in the closed state. For example, in the case where the priority item is set, the setting areas for the sort items are generated as accordion menus (toggle menus) and are each switchable between a displayed state (open state) and a hidden state (closed state). To explain it using the sort condition creation screen 908 in Fig. 9, a title area 919 of each sort item is provided with an open/close button 918, and the setting area for the sort item can be switched between the displayed state and the hidden state by using the open/close button 918. In the case where the open/close button 918 is depressed with the accordion menu closed, the accordion menu can be open. On the other hand, in the case where the open/close button 918 is depressed with the accordion menu expanded, the accordion menu can be closed.

In this way, in the present embodiment, in the case where the user selects a sort type for creating a sort condition, only settable sort items depending on the selected type can be contained in the sort condition creation screen. Moreover, only the setting area for a prioritized sort item can be displayed to the user in the opened state from the beginning, while the setting areas for the other sort items can be displayed in the closed state.

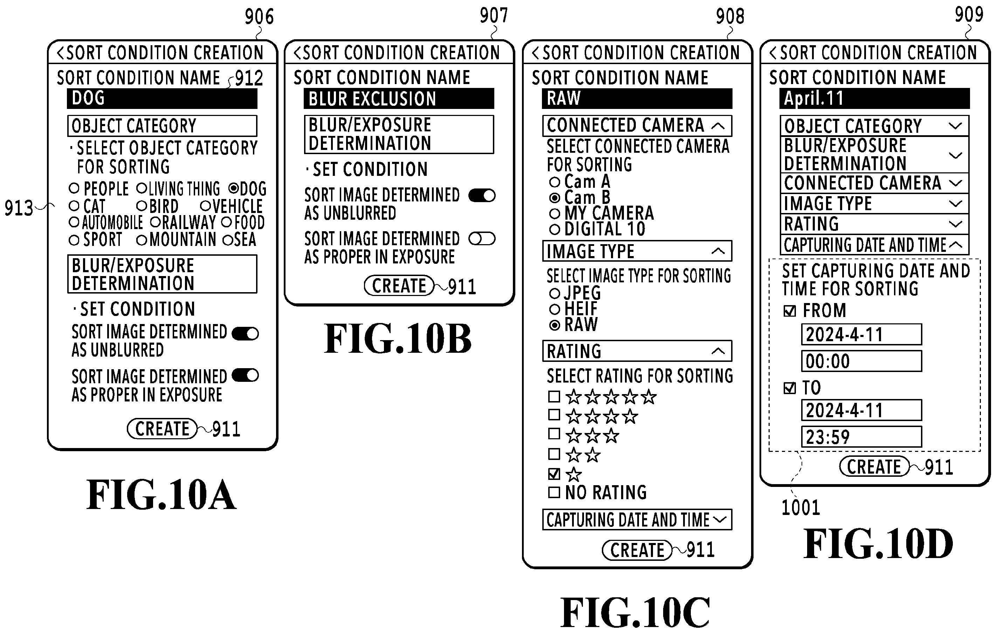

Figs. 10A to 10D are diagrams illustrating sort condition creation screens after the user inputs item values. A sort condition creation screen 906 in Fig. 10A is a sort condition creation screen after the user inputs an item value to the setting area 913 contained in the sort condition creation screen 906 in Fig. 9. Similarly, a sort condition creation screen 907 in Fig. 10B corresponds to the sort condition creation screen 907 in Fig. 9, a sort condition creation screen 908 in Fig. 10C corresponds to the sort condition creation screen 908 in Fig. 9, and a sort condition creation screen 909 in Fig. 10D corresponds to the sort condition creation screen 909 in Fig. 9. In reference to the sort condition creation screen 909 in Fig. 10D, the setting area 917 for the object category is closed, whereas the setting area 917 is opened on the sort condition creation screen 909 in Fig. 9. On the other hand, a setting area 1001 for the capturing date and time is opened, whereas the setting area 1001 is closed on the sort condition creation screen 909 in Fig. 9.

Since the setting areas for the sort items are displayed as the accordion menus, any of the setting areas for the sort items other than the priority item can be opened easily by the user depressing the open/close button 918, even though these setting areas are displayed in the closed state as described above.

Returning to Fig. 7, the description of the flowchart continues. In S706, the CPU 201 obtains a user's operation on the sort condition creation screen displayed on the terminal 102 of the user as a result of S705.

In S707, the CPU 201 determines whether a cancel button 910 or a creation button 911 was pressed by the operation obtained in S706.

If determining that the creation button 911 is depressed by the user's operation, the CPU 201 advances the processing to S708. In S708, the CPU 201 stores the item values set on the sort condition creation screen 906 to 909 displayed on the terminal 102 of the user. Then, the flowchart of Fig. 7 is terminated. If determining that the cancel button 910 is depressed by the user's operation, the CPU 201 skips S708 and terminates the flowchart of Fig. 7.

### [Sort condition Management Method]

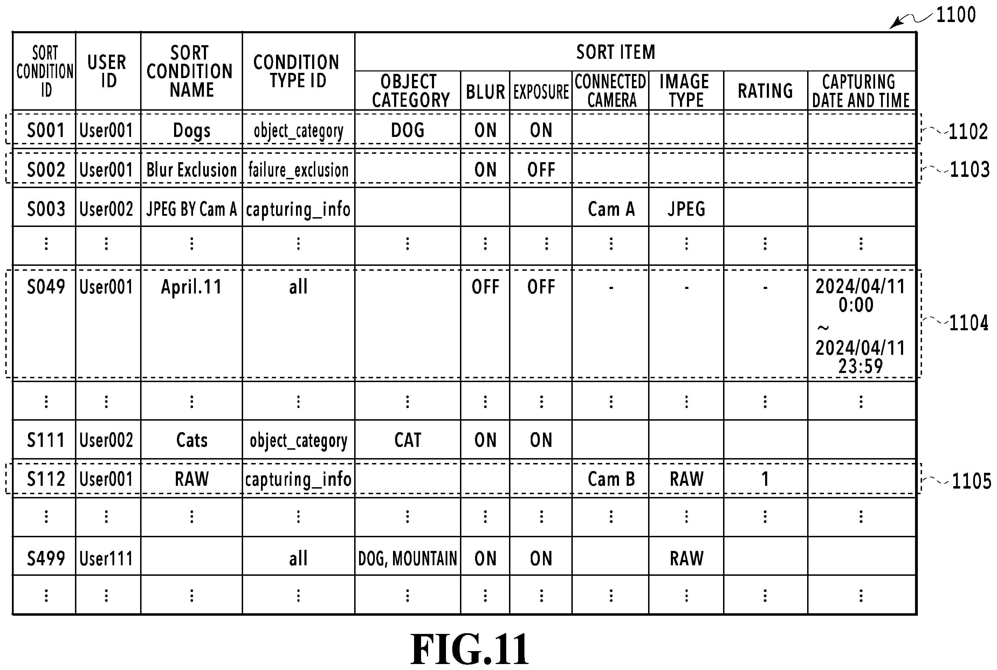

Fig. 11 is a diagram presenting a sort condition management table 1100 for the sort condition management unit 304 to manage sort conditions. The sort conditions created based on the user's inputs on the sort condition creation screens 906 to 909 are managed by using the sort condition management table 1100. A record (row) of the sort condition management table 1100 is added for each sort condition ID value uniquely identifying a sort condition. A user ID value, a sort condition name, a condition type ID, and sort item values associated with the sort condition ID value are held in the same record.

The sort condition name is the name of the sort condition, in which a text inputted to a condition name input field 912 on the sort condition creation screen 906 to 909 is held. The condition type ID column holds the ID value specifying the sort condition type selected by the user in the creation of the sort condition.

Rows 1102 to 1105 in the sort condition management table 1100 hold information on sort conditions created by a user A with a user ID "User001" via the sort condition creation screens 906 to 909. The row 1102 holds the information on the sort condition created in the case where the creation button 911 on the sort condition creation screen 906 in Fig. 10A is depressed. The row 1103 holds the information on the sort condition created in the case where the creation button 911 on the sort condition creation screen 907 in Fig. 10B is depressed. The row 1104 holds the information on the sort condition created in the case where the creation button 911 on the sort condition creation screen 909 in Fig. 10D is depressed. The row 1105 holds the information on the sort condition created in the case where the creation button 911 on the sort condition creation screen 908 in Fig. 10C is depressed.

### [Image Analysis Process]

Here, the process of analyzing an uploaded image to be executed in S405 of Fig. 4 includes executing, for example, a object classification process, a blur determination process, an exposure determination process, and a capturing information extraction process.

The object classification process is a process of extracting an object contained in an image to be analyzed and outputting a classification (category) of the extracted object. The exposure determination process is a process of determining whether the exposure of the image to be analyzed is proper or improper and outputting a determination result. The blur determination process is a process of determining whether or not the entire image to be analyzed is blurred and outputting a true or false value as a blur determination result. The capturing information extraction process is a process of extracting tag values from information, such as Exif, attached to the image to be analyzed and outputting the connected camera, the image type, the rating, and the capturing date and time as analysis results.

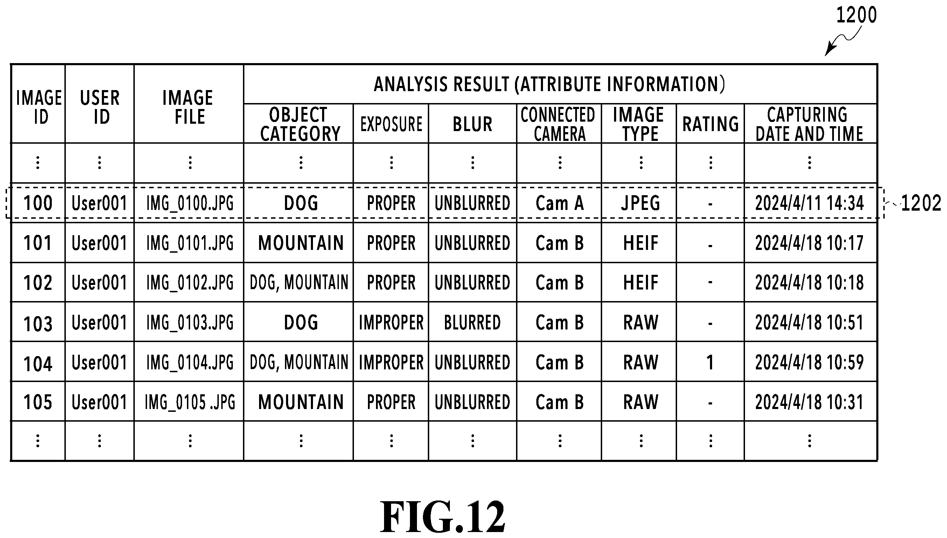

Fig. 12 is a diagram presenting an example of an image management table for the image management apparatus 101 to manage images uploaded by the user A with the user ID "User001" to the image management apparatus 101. In an image management table 1200, an image ID value uniquely identifying each image, a user ID of an owner of the image, an image file name, and values indicating the analysis results of the image as a result of the analysis in S405 are held in the same record and are associated with each other. Upon completion of the analysis process in S405, a record holding the information on the analyzed image is added to the image management table 1200 in Fig. 12.

### [Sort processing]

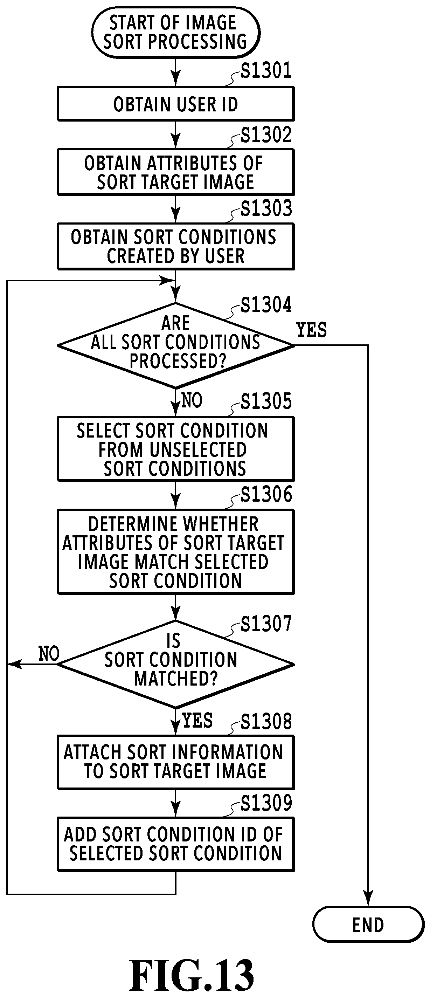

Fig. 13 is a flowchart for explaining details of the sort processing to be executed in S406 in Fig. 4.

In S1301, the CPU 201 obtains a user ID value specifying a target user. Hereinafter, the flowchart of Fig. 13 will be explained by using, as an example, a case where an event with an upload of an image with an image ID "100" held in the row 1202 of the image management table 1200 in Fig. 12 is obtained in S402. In this case, the image with the image ID "100" is a sort target image in the flowchart of Fig. 13. In S1301, the CPU 201 also obtains, as the target user ID, the user ID "User001" of the user who owns the sort target image.

In S1302, the CPU 201 obtains attribute information of the uploaded sort target image. In the present embodiment, from the row 1202 of the image management table 1200 in Fig. 12, the CPU 201 obtains the values of the image file and the analysis results, namely, the object category, the blur/exposure, the connected camera, the image type, the rating, and the capturing date and time.

In S1303, the CPU 201 obtains the sort condition associated with the target user ID "User001" from the sort condition management table 1100 in Fig. 11. For example, the CPU 201 obtains the sort conditions with the sort condition IDs "S001", "S002", "S049", and "S112" held in the rows 1102 to 1105 from the sort condition management table 1100.

The following processes in S1304 to S1309 constitutes loop processing in which the processes on each process target sort condition selected from the sort conditions obtained in S1303 are iterated while the process target is changed. In S1304, the CPU 201 determines whether or not all the sort conditions obtained in S1303 are already selected as the process target. If determining that a sort condition yet to be selected as the process target remains (No in S1304), the CPU 201 advances the processing to S1305.

In S1305, the CPU 201 selects a process target sort condition from the sort conditions yet to be selected among the sort conditions obtained in S1303.

In S1306, the CPU 201 determines whether or not the sort target image matches the current process target sort condition. For example, suppose that the process target sort condition is a sort condition with the sort condition ID "S001". In this case, the CPU 201 determines whether the attribute information (analysis results) of the sort target image, that is, the image with the image ID "100" matches the item values constituting the process target sort condition, namely, the object category "dog", the blur "ON", and the exposure "ON". Since the attribute information of the sort target image with the image ID "100" matches all the item values constituting the sort condition with the sort condition ID "S001", the CPU 201 determines that the sort target image matches the process target sort condition.

If determining that the sort target image matches the process target sort condition in S1307 (YES in S1307), the CPU 201 advances the processing to S1308. In S1308, the CPU 201 attaches, to the sort target image, the information that the image matches the process target sort condition.

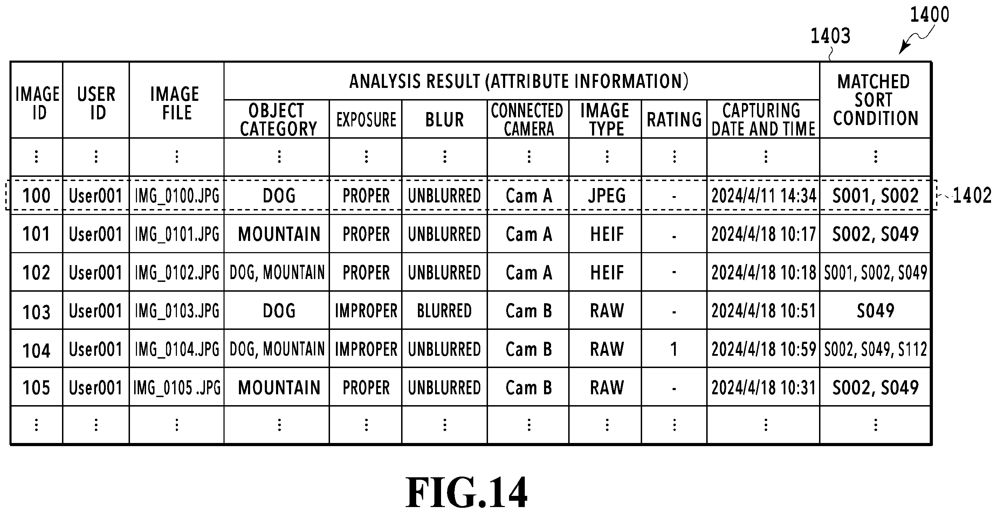

In S1309, the CPU 201 adds the sort condition ID value specifying the process target sort condition to a record in an image management table 1400 (see Fig. 14) in which the information on the sort target image is held.

After completing S1309, the CPU 201 returns the processing to S1304. If determining that the sort target image does not match the process target sort condition in S1307 (NO in S1307), the CPU 201 skips S1308 and S1309 and returns the processing to S1304. Then, the CPU 201 iterates S1305 to S1309 in the same manner on each of the other sort conditions obtained in S1303. The sort target image is determined as also matching the sort condition with the sort condition ID "S002".

If determining that a sort condition yet to be selected as the process target dose not remain among the sort conditions obtained in S1303 (YES in S1304), the CPU 201 terminates the flowchart of Fig. 13.

Fig. 14 is a diagram presenting an example of an image management table to which the execution results of the image sort processing in S406 of Fig. 4 are added. The image management table 1400 in Fig. 14 is a table in which a column 1403 for holding the sort condition ID value of each sort condition matched is added to the image management table 1200 in Fig. 12. As a result of executing the sort processing also on images with the image IDs "101" to "105" in the same manner, the sort conditions matched by the sort target images are stored as in Fig. 14.

In the column 1403 in a row 1402 holding the information on the image with the image ID "100", "S001" and "S002" are held as the sort condition ID values specifying the sort conditions determined as being matched by the image with image ID "100". Using the image management table 1400, the CPU 201 can present a list of images satisfying a certain sort condition to the user or display a list of thumbnails of images satisfying a certain sort condition.

After completion of the image sort processing in S406, the sort target image is transferred to the external apparatus 103 in the case where the automatic image transfer is enabled. In this process, the sort target image may be transferred to the external apparatus 103 only if the sort target image matches a certain sort condition.

In a case where the user creates a sort condition, the user images an image that the user desires to select and sets each of the item values of the sort items relevant to attribute information on the image. In a case where there are multiple types of attribute information on an image, the multiple types of the attribute information may have dependencies or the like, which may result in dependencies between the settings of the sort items. According to the present embodiment, in order for a user to create a sort condition for selecting an image from multiple images, it is possible to display an easy-to-understand sort condition creation screen specific to each sort type selected by the user. Thus, according to the present embodiment, the burden on the user in creating the sort condition can be reduced.

Here, the method of preferentially displaying the priority item on the sort condition creation screen is not limited to the method of displaying its accordion menu in the opened state. Instead, for example, the priority item may be displayed at the top position on the sort condition creation screen or displayed with a background color changed or with a font changed. The present embodiment is described such that the information is managed in the table format, but the format for information management is not limited to the table format, but may be another format such as a JSON format.

It is conceivable that a screen for creating a sort condition like the setting screen in Japanese Patent Laid-Open No. 2013-210872 could be presented to a user, and the user could create the sort condition by themselves by inputting values for the required items from among multiple items via that screen. However, the setting screen in Japanese Patent Laid-Open No. 2013-210872 contains the input fields of all the items to which the user can input values. Accordingly, in a case where there are a large number of items, the screen is so hard to grasp at a glance that the user cannot know how many items in total the values can be inputted for. For this reason, in the case where a screen like the setting screen in Japanese Patent Laid-Open No. 2013-210872 is presented to the user in order for the user to create a sort condition by themselves, the user may have to bear a heavy burden in creating the sort condition.

According to the technique disclosed herein, the burden on the user in creating a sort condition can be reduced.

### <Embodiment 2>

In the present embodiment, description will be given of a method in which an image management apparatus 101 displays an edit screen for editing the values of sort items constituting a sort condition, thereby enabling a user to edit a stored sort condition. The present embodiment will be described mainly about differences from Embodiment 1. Unless otherwise specified, the configuration and processes are the same as those in Embodiment 1.

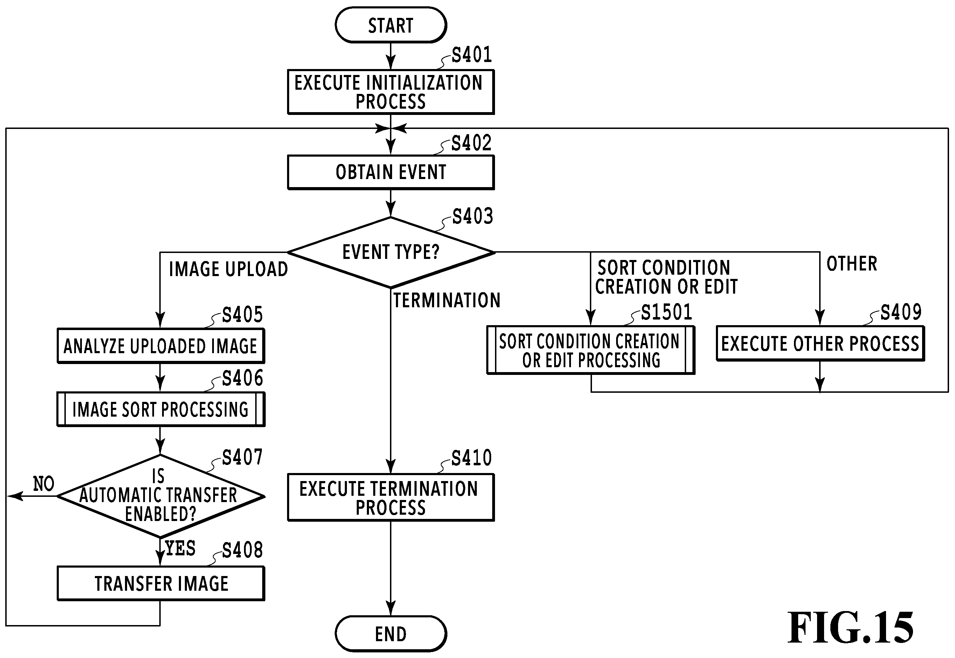

Fig. 15 is a flowchart presenting a sequence of overall processing of the image management apparatus 101 according to the present embodiment. Fig. 15 is the flowchart in which S404 in Fig. 4 presenting the overall processing in Embodiment 1 is changed to S1501. If obtaining an event with a user's instruction to enable the user to create or edit a sort condition in S403, the CPU 201 advances the processing to S1501. In S1501, the CPU 201 performs sort condition creation or edit processing.

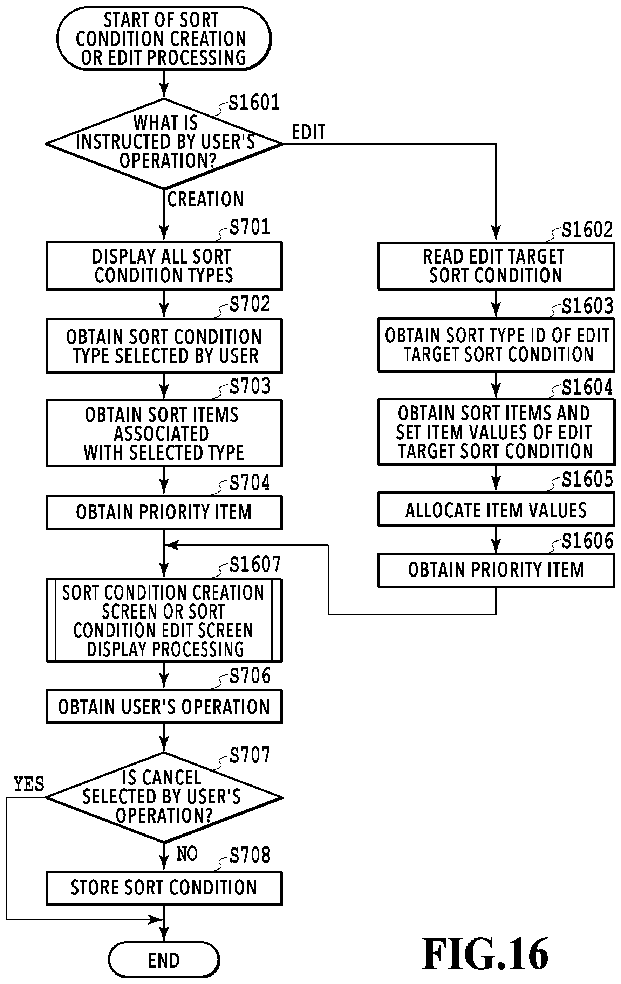

Fig. 16 is a flowchart for explaining details of the sort condition creation or edit processing to be executed in S1501 of Fig. 15. In the flowchart of Fig. 16, the same steps as those in Fig. 7 in Embodiment 1 are denoted by the same numbers. Therefore, in explaining the flowchart of Fig. 16, about steps different from those in the flowchart of Fig 7. will be explained

In S1601, the CPU 201 determines which is the event obtained in S402 of Fig. 15, an event with a user's instruction to create a sort condition or an event with a user's instruction to edit a sort condition. If determining that an event with a user's instruction to create a sort condition is obtained, the CPU 201 performs the foregoing processes in S701 to 708 except for S705, and performs a process in S1607 instead of S705. On the other hand, if determining that an event with a user's instruction to edit a sort condition is obtained, the CPU 201 advances the processing to S1602.

In S1602, the CPU 201 reads the sort condition designated as an edit target by the user's instruction. The following steps will be described on the assumption that the user issues an instruction to edit the sort condition with the sort condition ID "S112" held in the row 1105 of Fig. 11. In this case, in S1602, the CPU 201 reads the information held in the row 1105 of Fig. 11.

In S1603, the CPU 201 obtains the ID value specifying the sort condition type of the edit target. In the case of the sort condition with the sort condition ID "S112", the CPU 201 obtains "capturing_info" held in the condition type ID column in the row 1105 of Fig. 11.

In S1604, the CPU 201 obtains the sort items and their item values already set in the sort condition of the edit target. As the sort item and its item value already set for the sort condition ID "S112", the CPU 201 obtains the sort item "connected camera" with its set item value "Cam B" from the row 1105 of Fig. 11. Similarly, the CPU 201 obtains "image type" with "RAW" and "rating" with "1".

In S1605, the CPU 201 allocates the obtained item values to a sort condition edit screen.

In S1606, the CPU 201 obtains the value of the priority item associated with the condition type ID obtained in S1603 from the sort condition type management table 600 of Fig. 6. The value of the condition type ID obtained in S1603 is "capturing_info". Accordingly, the CPU 201 obtains "connected camera" as the priority item name from the priority item column in the row 604 in which "capturing_info" is held in the condition type ID column in the sort condition type management table 600 of Fig. 6.

Moreover, the CPU 201 obtains the sort item names for which "display" is held from the row (record) in which the condition type ID obtained in S1603 is held in the sort condition type management table 600 of Fig. 6.

In S1607, the CPU 201 executes the sort condition creation screen or sort condition edit screen display processing.

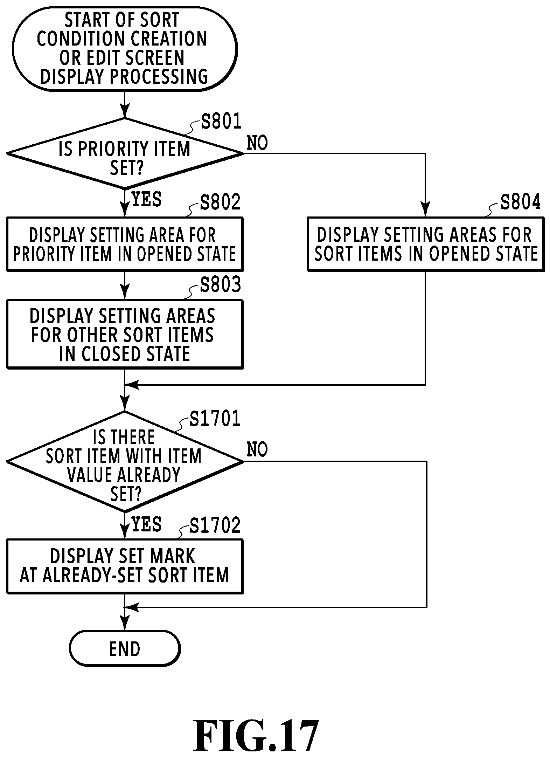

Fig. 17 is a flowchart for explaining details of the processing in S1607 of Fig. 16. The flowchart of Fig. 17 is the flowchart in which S1701 and S1702 are added to the flowchart of Fig. 8 in Embodiment 1. Therefore, the flowchart of Fig. 17 will be described about steps different from those in the flowchart of Fig 8.

Since the CPU 201 obtains "connected camera" as the priority item name in S1606, the CPU 201 determines YES in S801 of Fig. 17 and executes the processes in S802 and S803. In S802 and S803 of Fig. 17, the CPU 201 generates the sort condition edit screen on which the setting area for priority item, namely, the sort item "connected camera" is displayed in the opened state and the setting areas for the other sort items are displayed in the closed state. Then, the processing proceeds to S1701.

In S1701, the CPU 201 determines whether or not there is a sort item for which the item value is already set. Since the CPU 201 obtains the set item values in S1604, the CPU 201 determines that there are the sort items for which the item values are already set and advances the processing to S1702.

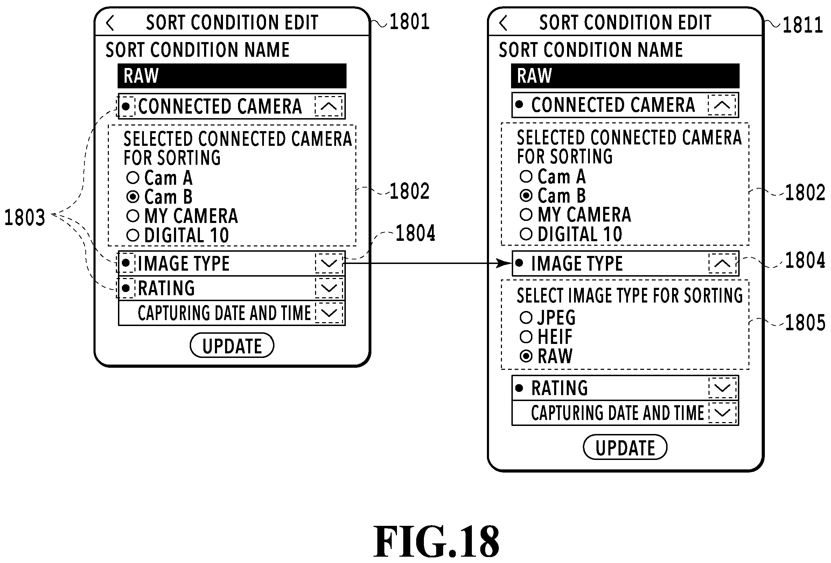

In S1702, the CPU 201 displays set marks 1803 (see Fig. 18) in the title areas for the sort items "connected camera", "image type", and "rating" for which the item values are already set, and terminates the processing.

Fig. 18 is a diagram illustrating an example of a sort condition edit screen generated as a result of S1607 of Fig. 16. A sort condition edit screen 1801 in Fig. 18 is an example of a screen for editing the sort condition with the sort condition ID "S112" held in the row 1105 of Fig. 11.

As illustrated in the sort condition edit screen 1801, the setting area 1802 for the priority item "connected camera" is displayed in the opened state. The setting areas for the other sort items for which "display" is held in the sort condition type management table 600 of Fig. 6 are displayed in the closed state. The set marks 1803 are displayed in the title areas for the sort items "connected camera", "image type", and "rating" for which the item values are already set.

A sort condition edit screen 1811 is an example of a screen in a case where the user depresses an open/close button 1804 in the title are for "image type" on the sort condition edit screen 1801. As in the sort condition edit screen 1811, in the case where the setting area 1805 for "image type" is displayed in the opened state, the setting area 1805 is displayed in a state where the already-set item value is inputted.

As described above, according to the present embodiment, for editing the created sort condition, the sort item with the highest priority among the sort items specific to the sort type is displayed in the opened state. In addition, since the marks are attached to the already-set sort items in the closed state, the user can find out the sort items for which the item values are already set. According to the present embodiment, it is possible to help the user to edit the sort condition as described above.

### <Other Embodiments>

The foregoing embodiments have been described for the case where one priority item is set, but the present disclosure is not limited to this. In a case where multiple priority items are set, the setting areas for all the priority items may be displayed in the opened state. In addition, the foregoing embodiments have been described by using the example in which the sort items and the priority item specific to each sort condition type are managed by using the sort information management table, but the management method is not limited to this. The logic may be implemented as program codes for a user to create a sort condition.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101) comprising:
a management unit (302) configured to manage a plurality of types of sort conditions, each of the types associated with one or more items for sorting an image;
an obtaining unit (301) configured to obtain the type selected by a user from the plurality of the types of sort conditions; and
a display control unit (303) configured to cause a screen to be displayed, the screen being for creating the sort condition and being configured to allow the user to designate a value of the item associated with the type selected by the user.

2. The information processing apparatus according to claim 1, wherein
in a case where there are a plurality of the items for sorting an image, the screen does not contain the item other than the items associated with the type selected by the user from the plurality of the items.

3. The information processing apparatus according to claim 1 or 2, wherein
the management unit manages a priority item associated with a type of the sort condition, the priority item being displayed with priority on the screen among the items associated with the type of the sort condition and
the display control unit causes the screen to be displayed in a state where the priority item is displayed in a manner different from the items other than the priority item.

4. The information processing apparatus according to claim 3, wherein
in a case where the priority item is managed to be associated with the type selected by the user, the display control unit causes the screen to be displayed in a state where a setting area for the priority item is opened while a setting area for the item other than the priority item among the items associated with the type selected by the user are closed, the setting area being an area in which the value is to be designated by the user.

5. The information processing apparatus according to claim 4, wherein
the item contained in the screen is displayed as accordion menu, and
the display control unit causes the screen to be displayed in a state where the item other than the priority item is displayed with the accordion menus closed and the priority item is displayed with the accordion menu opened.

6. The information processing apparatus according to any one of claims 1 to 5, further comprising
a creation unit configured to create the sort condition composed of the value designated by the user via the screen.

7. The information processing apparatus according to claim 6, further comprising
a sort condition management unit configured to manage a first sort condition associated with a first type of the sort condition, the first sort condition being a sort condition created via the screen specific to the first type of the sort condition, the first type of the sort condition being a type of the sort condition selected for displaying the screen.

8. The information processing apparatus according to claim 7, wherein
the display control unit obtains information on the sort condition of an edit target designated by the user and causes an edit screen for editing the sort condition of the edit target to be displayed.

9. The information processing apparatus according to claim 8, wherein
the display control unit obtains the type associated with the sort condition of the edit target from the sort condition management unit, obtains a priority item associated with the obtained type from the management unit, and causes the edit screen to be displayed in a state where a setting area for the priority item is opened while the setting area for the item other than the priority item are closed.

10. The information processing apparatus according to claim 8 or 9, wherein
the management unit further manages the value designated by the user for each of the items constituting the sort condition, and
the display control unit causes the edit screen to be displayed in a state where a predetermined mark is attached to each item for which the value is designated.

11. The information processing apparatus according to any one of claims 1 to 10, further comprising:
a sort unit configured to sort an image matching a sort condition created via the screen from images of a certain user; and
a transfer unit configured to transfer the sorted image to an external apparatus.

12. The information processing apparatus according to any one of claims 1 to 11, wherein
the display control unit causes the screen to be displayed on a terminal via a network.

13. The information processing apparatus according to any one of claims 1 to 12, wherein
the display control unit causes a second screen to be displayed, the second screen containing areas respectively associated with one of the plurality of the types of sort conditions and configured to allow the user to select the type from the plurality of the types of the sort conditions, and
the obtaining unit obtains the type of the sort condition associated with the area selected by the user on the second screen.

14. An information processing method comprising:
managing a plurality of types of sort conditions, each of the types associated with one or more items for sorting an image (302);
obtaining the type selected by a user from the plurality of the types of sort conditions (301); and
causing a screen to be displayed, the screen being for creating the sort condition and being configured to allow the user to designate a value of the item associated with the type selected by the user (303).

15. A program which causes a computer to execute the units of the information processing apparatus according to any one of claims 1 to 13.
